# EUROPEAN PATENT SPECIFICATION

(11) **EP 3 615 406 B1**
(45) Date of publication and mention of the grant of the patent: **29.05.2024**
(21) Application number: 18727894.0
(22) Date of filing: 26.04.2018
(51) Int. Cl.: B62K 25/02

(54) **BICYCLE WHEEL AXLE ASSEMBLY**
FAHRRADRADACHSENANORDNUNG
ENSEMBLE AXE DE ROUE DE BICYCLETTE

(30) Priority: 27.04.2017 NL 2018800
(43) Date of publication of application: 04.03.2020
(73) Proprietor: ADVANCING TECHNOLOGIES B.V., 5656 AE Eindhoven (NL)
(72) Inventor: VAN DRUTEN, Roëll Marie, 5658 EG Eindhoven (NL); VAN DEN BRAND, Johannes Gijsbertus Antonius, 5632 ML Eindhoven (NL)
(74) Representative: V.O.
(86) International application number: PCT/NL2018/050275
(87) International publication number: WO 2018/199759

(56) References cited:
- EP-A2- 2 565 052
- CN-U- 202 294 084
- FR-A- 1 105 376
- US-A1- 2010 170 762

## Description

### FIELD OF THE INVENTION

The invention relates to bicycle wheel axle assemblies. More in general the invention relates to wheel axle assemblies. The invention also relates to a bicycle including a wheel axle assembly.

### BACKROUND TO THE INVENTION

Bicycle wheel axle assemblies are known. For example from EP 2 565 052 A2, which is considered to represent the closest prior art and discloses the preamble of claim 1.

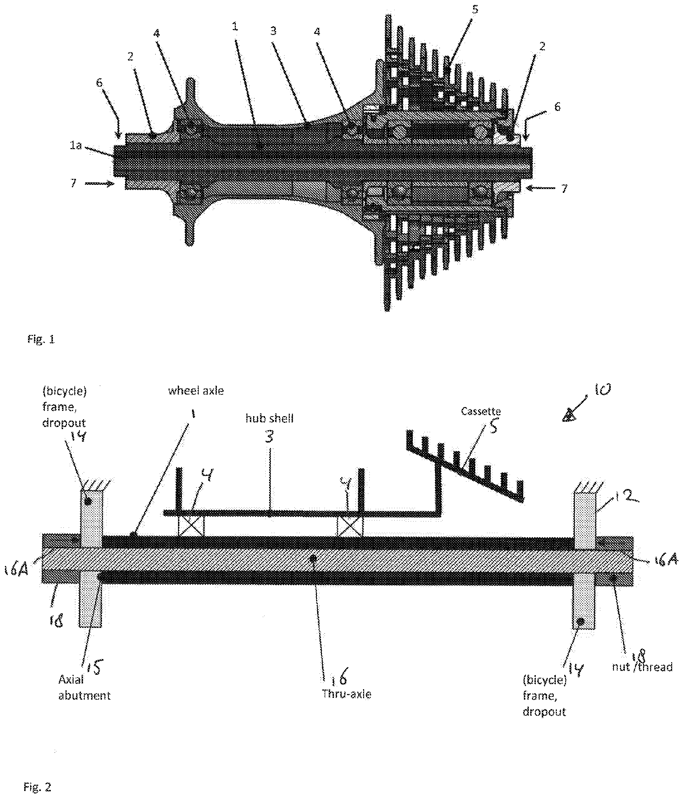

Figure 1 shows an example of a cross section of a known wheel axle assembly. The wheel axle assembly includes a wheel axle 1. The wheel axle can be hollow, with a hole 1a extending through the axle. Generally, the assembly includes an axle end interfaces 2 and a hub shell 3. Bearings 4 support the hub shell 3 on the wheel axle 1. For driving the hub in rotation, the assembly generally includes one or more sprockets 5, such as a cassette. The assembly generally includes radial support points 6 and axial support points 7 for supporting the assembly in a fork of a bicycle frame, such as in dropouts. A thru-axle can be inserted through the opening 1a for fixing the assembly relative to the frame.

### SUMMARY OF THE INVENTION

It is an object to provide a wheel axle assembly capable of transmitting a torque to the frame (dropouts). It is an object to provide a bicycle capable of transmitting a torque from the wheel axle to the frame (dropouts).

More in general it can be an object to provide an alternative assembly and/or bicycle.

According to an aspect a wheel axle assembly is provided for a wheel, such as a driven wheel, e.g. a rear wheel, of a bicycle. The wheel axle assembly includes a wheel axle. The wheel axle is hollow and arranged for being attached to dropouts, e.g. on a fork, e.g. on the stays of a rear fork, of the bicycle. The wheel axle assembly includes a first axially toothed profile. The frame, at the dropout, includes a second axially toothed profile. The first profile can transfer a torque to the wheel axle in tangential direction. The second profile can transfer a torque to the frame in a tangential direction. Thus a torque in tangential direction can be transferred fro the wheel axle to the frame.

According to the invention, the wheel axle assembly includes a form-locking connection between the first axially toothed profile and the wheel axle. The form-locking connection allows the first axially toothed profile to move in an axial direction of the wheel axle.

Optionally, the wheel axle assembly includes an intermediate body between the first axially toothed profile and the wheel axle. Optionally, the intermediate body is arranged for moving the first profile towards the frame when a thru-axle is in inserted through the hollow axle.

Optionally, a form-locking connection is included between the second axially toothed profile and the frame, e.g. the dropout. The form-locking connection can allow transferring a torque to the frame in tangential direction. Optionally, an auxiliary member is included attached the frame for forming the form-locking connection. Optionally, the auxiliary member is attached to the frame via at least one of the attachment points of a disc brake. Optionally, the auxiliary member is attached to the frame via at least one of the attachment points of the rear derailleur.

Optionally, the second axially toothed profile includes a hole through which the thru-axle can be inserted. Optionally, a diameter of the hole is smaller than a diameter of the wheel axle.

According to an aspect, if no thru-axle is present in the wheel axle, the first axially toothed profile is positioned away from he frame. According to an aspect, when the thru-axle is inserted through the wheel axle, this causes the first axially toothed profile to move towards the frame, e.g. to the dropout. This allows a form-locking engagement to occur between the first and second axially toothed profiles. When removing the thru-axle from the wheel axle, the first axially toothed profile moves away from the frame, e.g. dropout, and the wheel axle can easily be taken from the frame.

According to an aspect a transmission, e.g. a gear box, is provided between the driver, e.g. the cassette, and the hub shell. The driver includes at least one sprocket. The driver, e.g. the cassette, can include a plurality of different sprockets.

Optionally, a torque support member of the transmission is connected to the wheel axle. The support torque can be transferred to the frame via the wheel axle and the first and second axially toothed profiles.

It will be appreciated that any one or more of the above aspects, features and options can be combined. It will be appreciated that any one of the options described in view of one of the aspects can be applied equally to any of the other aspects. It will also be clear that all aspects, features and options described in view of the methods apply equally to the system, device and container, and vice versa.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a cross section of a wheel axle assembly;
Fig. 2 shows a schematic representation of a cross sectional view of a wheel axle assembly;
Fig. 3 shows a schematic representation of a cross sectional view of a wheel axle assembly;
Fig. 4 shows a schematic representation of a cross sectional view of a wheel axle assembly;
Fig. 5 shows a schematic representation of a cross sectional view of a wheel axle assembly; and
Fig. 6 shows a schematic representation of a cross sectional view of a wheel axle assembly.

### DETAILED DESCRIPTION

Figure 2 shows a schematic cross section of a known method of attaching a wheel axle assembly 10 to a bicycle frame 12. The hollow axle 1 of the wheel axle assembly 10 is positioned between two dropouts 14 of the bicycle frame 12. Here the dropouts 14 are part of the rear fork of the bicycle frame. In Figure 1 the wheel axle assembly includes a hub shell 3. Bearings 4 support the hub shell 3 on the wheel axle 1. For driving the hub in rotation, the assembly 10 includes a cassette including a plurality of sprockets 5. In the schematic representation axle end interfaces 2 are not shown, but may be present. The wheel axle 1 is in axial abutment 15 with the dropouts 14. In Figure 2, a thru-axle 16 is inserted through the hollow wheel axle 1. Here, the thru-axle is held in place and secured to the frame 12 by nuts 18 which are threaded on threaded ends 16A of the thru-axle 16.

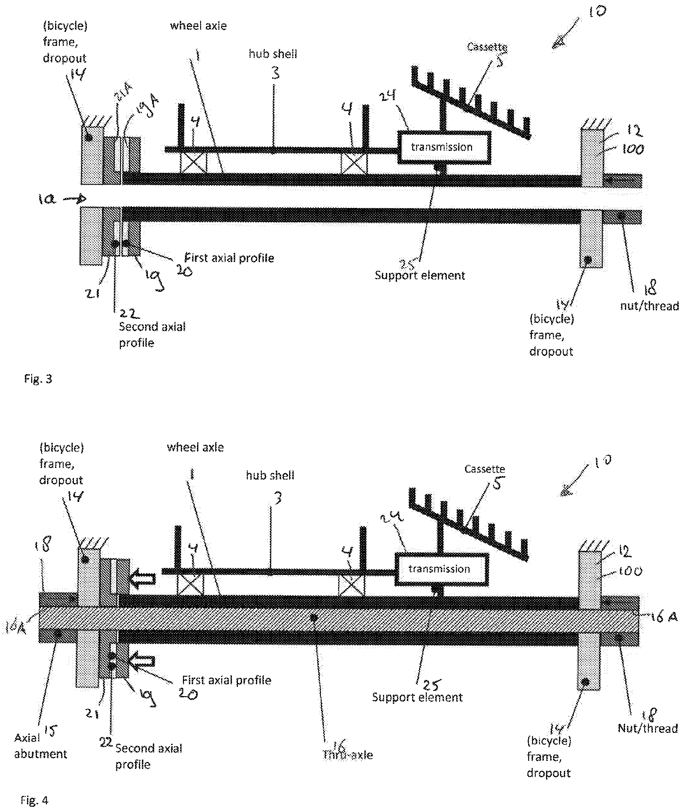

Figure 3 shows an example of a schematic cross section of a wheel axle assembly 10. In this example the wheel axle assembly is for use in a driven wheel of a bicycle, such as a rear wheel. The wheel axle assembly 10 includes a wheel axle 1. The wheel axle is hollow, with a hole 1a extending through the axle. A thru-axle 16 can be inserted through the hollow axle 1. The wheel axle assembly 10 can include axle end interfaces 2 as shown in Figure 1, although not shown in the schematic representation of Figure 3. The wheel axle assembly 10 includes a hub shell 3. Bearings 4 support the hub shell 3 on the wheel axle 1. For driving the hub in rotation, the assembly 10 includes a driver 5, here including a plurality of sprockets, such as a cassette. The wheel axle assembly 10 is shown positioned between dropouts 14 of a rear fork of a frame 12 of a bicycle 100.

In the example of Figure 3, the wheel axle assembly 10 includes a first axially toothed profile 20. The first axially toothed profile 20 is arranged for transferring a torque to the wheel axle 1 in tangential direction. In this example, the first axially toothed profile is part of a first torque transfer member 19. The first torque transfer member 19 is axially movably coupled to the wheel axle 1. The first torque transfer member is not rotatable relative to the wheel axle 1. Thereto, the wheel axle assembly 1 including a form-locking connection, such as a keyed connection between the first axially toothed profile 20, e.g. the first torque transfer member 19, and the wheel axle 1. The form-locking connection allows the first axially toothed profile 20 to move in axial direction of the wheel axle 1, while preventing rotation of the first axially toothed profile around the axis of the wheel axle. Thus, a torque can be transmitted from the wheel axle 1 to the first axially toothed profile 20.

In the example of Figure 3, the frame 12 includes a second axially toothed profile 22. The second axially toothed profile 22 is arranged for transferring a torque to the frame 12 in tangential direction. In this example, the second axially toothed profile 22 is part of a second torque transfer member 21. Here, a hole is provided through the second torque transfer member 21 for allowing the thru-axle 16 to be inserted through. Here the hole is smaller than an outer diameter of the wheel axle 1, so that the wheel axle 1 cannot be inserted into the second torque transfer member 21. The second torque transfer member 21 can be an auxiliary member allowing to provide the second axially toothed profile to the frame without modifying existing parts of the frame, e.g. of the dropouts. The second torque transfer member 21 is coupled to the frame 12. The second torque transfer member 21 is not rotatable relative to the frame 12. Thereto, the frame 12 including a form-locking connection, such as a keyed connection between the second axially toothed profile 22, e.g. the second torque transfer member 21, and the frame 12, e.g. the dropout 14. The form-locking connection prevents rotation of the second axially toothed profile 22 around the axis of the wheel axle. Thus, a torque can be transmitted from the second axially toothed profile 22 to the frame 12. Here the second torque transfer member is positioned next to the dropout 14. It is possible that the second torque transfer member is attached to the frame via at least one of the attachment points of a disc brake. It is possible that the second torque transfer member is attached to the frame via at least one of the attachment points of a rear derailleur. It is noted that in the example of Figure 3 the first axially toothed profile 20 is not yet in engagement with the second axially toothed profile 22.

Figure 4 shows the wheel axle assembly 10 of Figure 3, wherein a thru-axle 16 is inserted through the hollow axle 1. Now the first axially toothed profile 20 is moved in an axial direction of the wheel axle 1 towards the second axially toothed profile 22. Thereby the first and second axially toothed profiles engage, e.g. interlock. The engaged first and second axially toothed profiles allow a torque to be transferred from the first axially toothed profile 20 to the second axially toothed profile 22. Hence, in this state, a torque can be transferred from the wheel axle 1, via the first and second axially toothed profiles 20, 22, to the frame 12.

In the example of Figure 4, the driver 5 is connected to the hub shell 3 via a transmission 24. In this example, the transmission is arranged to selectively be in a first mode and in a second mode. In the first mode a transmission ratio of the transmission 24 is different from a transmission ratio in the second mode. Here, in the first mode the transmission ratio is unity (output rotation speed at the hub equals input rotation speed at the driver). Here, in the second mode the transmission ratio is a speed reduction (output rotation speed at the hub is smaller than the input rotation speed at the driver). Hence, the transmission can e.g. mimic the functioning of a front derailleur. It is also possible that other transmission ratios are used. It is also possible that the transmission has more than two modes. The transmission can be arranged to operate in more than two transmission ratios. It is also possible that the driver 5 includes a single sprocket. Here, the transmission 24 is arranged such that a torque is to be transferred to a non-rotating part of the bicycle for enabling at least one of the different transmission ratios. Said torque here is transferred to the wheel axle 1 via a support element 25. Thus, the torque can be transferred from the transmission 24 via the support element 25, via the wheel axle 1, via the first and second axially toothed profiles 20, 22 to the frame 12, e.g. the dropout 14.

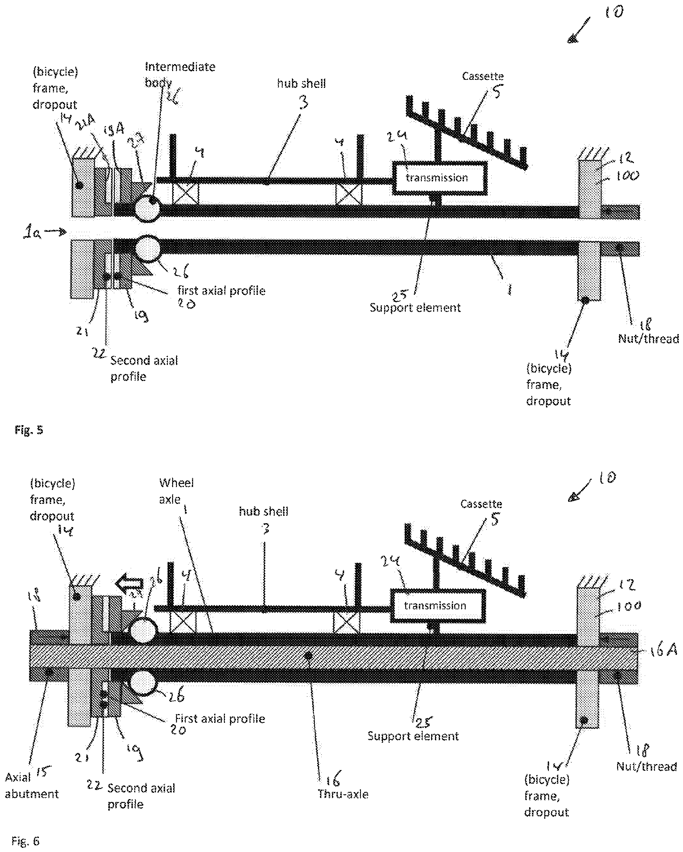

Figures 5 and 6 shows an example of a schematic cross section of a wheel axle assembly 10. In this example, the wheel axle assembly 10 includes an intermediate body 26 between the first axially toothed profile 20 and the wheel axle 1. The intermediate body 26 is arranged for moving the first axially toothed profile 20 in an axial direction of the wheel axle 1 upon insertion of the thru-axle 16. Here the intermediate body 26 extends through a wall of the hollow axle 1 into the opening 1a through the hollow axle 1. Here, the intermediate body 26 is arranged for moving in a radial direction upon passing of the thru-axle 16. In this example, the first torque transfer member 19 is arranged for being actuated to move in an axial direction of the wheel axle 1, by the radial movement of the intermediate body 26.

The intermediate body can e.g. be a ball. In Figure 5 the ball extends through the wall of the wheel axle. The ball extends partially into the hollow inner space of the wheel axle. Upon insertion of the thru-axle, the ball is moved radially outwardly. In the example of Figure 5 the first torque transfer member includes a slanted surface 27, e.g. a cone-shaped surface. Radial outward movement of the ball against the slanted surface 27 will cause the first torque transfer member 19 to move axially towards the second torque transfer member 21.

It will be appreciated that the first axially toothed profile 20 and the second axially toothed profile 22 are arranged to mutually engage, e.g. interlock. Thereto, the first axially toothed profile 20 can include one or more protrusions and/or depressions. The protrusions and/or depressions of the first axially toothed profile 20 can protrude and/or sit back, respectively, from an axial face 19A of the first torque transfer member 19. The second axially toothed profile 22 can included one or more depressions and/or protrusions, respectively. The depressions and/or protrusions of the second axially toothed profile 22 can sit back and/or protrude, respectively, from an axial face 21A of the second torque transfer member 21. The one or more depressions and/or protrusions of the second axially toothed profile 22 are arranged for cooperating with the one or more protrusions and/or depressions of the first axially toothed profile 20, respectively. The protrusions can e.g. include ribs. The depressions can e.g. include grooves. The ribs and/or grooves can e.g. extend on the axial faces 19A, 21A, e.g. in a radial direction. However, other protrusions and depressions are also envisioned.

In the examples, the thru-axle is shown as secured to the frame by nuts. It will be appreciated that other connections are possible, such as for example quick locks.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the spirit and scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. Wheel axle assembly (10) for a wheel of a bicycle, including a hollow wheel axle (1) arranged for being attached to dropouts (14) of a frame (12) of the bicycle,
wherein the wheel axle assembly includes a first torque transfer member (19) having a first axially toothed profile (20) arranged for engaging a second axially toothed profile at the frame at one of the dropouts,
**characterized by**
a form-locking connection between the first torque transfer member (19) and the wheel axle (1), movably coupling the first torque transfer member to the wheel axle for allowing the first torque transfer member (19) to move in axial direction of the wheel axle, for transferring torque from the wheel axle via the first and second axially toothed profiles to the frame.

2. Wheel axle assembly (10) according to claim 1, including an intermediate body (26) between the first axially toothed profile (20) and the wheel axle (1).

3. Wheel axle assembly (10) according to claim 2, wherein the intermediate body (26) is arranged for moving the first profile (20) towards the frame when a thru-axle (16) is inserted through the hollow axle (1).

4. Bicycle including a frame (12) and a wheel axle assembly (10) according to any one of the preceding claims connected thereto, wherein a second axially toothed profile (22) is included next to a dropout (14), wherein the second axially toothed profile is arranged for transferring a torque to the frame (12) in tangential direction.

5. Bicycle according to claim 4, including a form-locking connection between the second axially toothed profile (22) and the dropout (14), the form-locking connection allowing transferring a torque to the frame in tangential direction.

6. Bicycle according to claim 5, including an auxiliary member (21) attached to the frame and form-lockingly connected to the second axially toothed profile.

7. Bicycle according to claim 6, wherein the auxiliary member (21) is attached to the frame via at least one of the attachment points of a disc brake.

8. Bicycle according to claim 6 or 7, wherein the auxiliary member (21) is attached to the frame via at least one of the attachment points of the rear derailleur.

9. Bicycle according to ay one of claims 4-8, wherein the second axially toothed profile (22) includes a hole through which the thru-axle (16) can be inserted.

10. Bicycle according to claim 9, wherein a diameter of the hole is smaller than a diameter of the wheel axle (1).

## Patentansprüche

1. Radachsenbaugruppe (10) für ein Rad eines Fahrrads, beinhaltend eine hohle Radachse (1), die zur Befestigung an Ausfallenden (14) eines Rahmens (12) des Fahrrads angeordnet ist,
wobei die Radachsenbaugruppe ein erstes Drehmomentübertragungselement (19) mit einem ersten axial verzahnten Profil (20) beinhaltet, das für den Eingriff mit einem zweiten axial verzahnten Profil an dem Rahmen an einem der Ausfallenden angeordnet ist,
**gekennzeichnet durch**
eine formschlüssige Verbindung zwischen dem ersten Drehmomentübertragungselement (19) und der Radachse (1), die das erste Drehmomentübertragungselement beweglich mit der Radachse koppelt, zum Ermöglichen, dass sich das erste Drehmomentübertragungselement (19) in axialer Richtung der Radachse bewegt, zum Übertragen des Drehmoments von der Radachse über das erste und zweite axial verzahnte Profil auf den Rahmen.

2. Radachsenbaugruppe (10) nach Anspruch 1, beinhaltend einen Zwischenkörper (26) zwischen dem ersten axial verzahnten Profil (20) und der Radachse (1).

3. Radachsenbaugruppe (10) nach Anspruch 2, wobei der Zwischenkörper (26) eingerichtet ist, um das erste Profil (20) in Richtung des Rahmens zu bewegen, wenn eine Steckachse (16) durch die Hohlachse (1) eingeführt wird.

4. Fahrrad, das einen Rahmen (12) und eine damit verbundene Radachsenbaugruppe (10) nach einem der vorhergehenden Ansprüche beinhaltet, wobei neben einem Ausfallende (14) ein zweites, axial verzahntes Profil (22) vorgesehen ist, wobei das zweite, axial verzahnte Profil zum Übertragen eines Drehmoments in tangentialer Richtung auf den Rahmen (12) angeordnet ist.

5. Fahrrad nach Anspruch 4, das eine formschlüssige Verbindung zwischen dem zweiten axial verzahnten Profil (22) und dem Ausfallende (14) beinhaltet, wobei die formschlüssige Verbindung die Übertragung eines Drehmoments auf den Rahmen in tangentialer Richtung ermöglicht.

6. Fahrrad nach Anspruch 5, das ein Hilfselement (21) beinhaltet, das am Rahmen befestigt und formschlüssig mit dem zweiten, axial verzahnten Profil verbunden ist.

7. Fahrrad nach Anspruch 6, wobei das Hilfselement (21) über mindestens einen der Befestigungspunkte einer Scheibenbremse am Rahmen befestigt ist.

8. Fahrrad nach Anspruch 6 oder 7, wobei das Hilfselement (21) über mindestens einen der Befestigungspunkte des Schaltwerks am Rahmen befestigt ist.

9. Fahrrad nach einem der Ansprüche 4 bis 8, wobei das zweite, axial verzahnte Profil (22) ein Loch beinhaltet, durch das die Steckachse (16) eingeführt werden kann.

10. Fahrrad nach Anspruch 9, wobei ein Durchmesser des Lochs kleiner ist als ein Durchmesser der Radachse (1).

## Revendications

1. Ensemble formant axe de roue (10) pour une roue d'une bicyclette, comprenant un axe de roue creux (1) agencé pour être fixé aux pattes (14) d'un cadre (12) de la bicyclette,
l'ensemble formant axe de roue comprenant un premier élément de transfert de couple (19) ayant un premier profil denté axialement (20) agencé pour s'engager avec un deuxième profil denté axialement au niveau du cadre au niveau de l'une des pattes, **caractérisé par**
une liaison à verrouillage de forme entre le premier élément de transfert de couple (19) et l'essieu de roue (1), couplant de manière mobile le premier élément de transfert de couple à l'essieu de roue pour permettre au premier élément de transfert de couple (19) de se déplacer dans la direction axiale de l'axe de roue, pour transférer le couple de l'essieu de roue via les premier et deuxième profils dentés axialement au cadre.

2. Ensemble formant axe de roue (10) selon la revendication 1, comprenant un corps intermédiaire (26) entre le premier profil denté axialement (20) et l'axe de roue (1).

3. Ensemble formant axe de roue (10) selon la revendication 2, dans lequel le corps intermédiaire (26) est agencé pour déplacer le premier profil (20) vers le cadre lorsqu'un axe traversant (16) est inséré à travers l'essieu creux (1).

4. Bicyclette comprenant un cadre (12) et un ensemble formant axe de roue (10) selon l'une quelconque des revendications précédentes qui y est relié, dans lequel un deuxième profil denté axialement (22) est inclus à côté d'une patte (14), dans lequel le deuxième profil denté axialement est agencé pour transférer un couple au cadre (12) dans une direction tangentielle.

5. Bicyclette selon la revendication 4, comportant une liaison par verrouillage de forme entre le deuxième profil denté axialement (22) et la patte (14), la liaison par verrouillage de forme permettant de transférer un couple au cadre en direction tangentielle.

6. Bicyclette selon la revendication 5, comprenant un élément auxiliaire (21) fixé au cadre et relié par verrouillage de forme au deuxième profil axialement denté.

7. Bicyclette selon la revendication 6, dans laquelle l'élément auxiliaire (21) est fixé au cadre via au moins un des points de fixation d'un frein à disque.

8. Bicyclette selon la revendication 6 ou 7, dans laquelle l'élément auxiliaire (21) est fixé au cadre via au moins un des points de fixation du dérailleur arrière.

9. Bicyclette selon l'une des revendications 4 à 8, dans laquelle le deuxième profil denté axialement (22) comprend un trou à travers lequel l'axe traversant (16) peut être inséré.

10. Bicyclette selon la revendication 9, dans laquelle un diamètre du trou est inférieur à un diamètre de l'axe de roue (1).
